(19) Europäisches Patentamt

European Patent Office

Office européen des brevets

(11) **EP 3 433 958 B1**

## (12) EUROPEAN PATENT SPECIFICATION

(45) Date of publication and mention
of the grant of the patent:
**13.05.2020 Bulletin 2020/20**

(21) Application number: **16716930.9**

(22) Date of filing: **24.03.2016**

(51) Int Cl.:
*H04L 1/00* (2006.01)          *H04W 52/24* (2009.01)
*H04L 1/18* (2006.01)

(86) International application number:
**PCT/SE2016/050245**

(87) International publication number:
**WO 2017/164783 (28.09.2017 Gazette 2017/39)**

(54) **A METHOD AND APPARATUS FOR DETERMINING A VALUE FOR A TRANSMISSION PARAMETER**

VERFAHREN UND VORRICHTUNG ZUR BESTIMMUNG EINES WERTS FÜR EINEN ÜBERTRAGUNGSPARAMETER

PROCÉDÉ ET APPAREIL DE DÉTERMINATION D'UNE VALEUR POUR UN PARAMÈTRE DE TRANSMISSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.01.2019 Bulletin 2019/05**

(73) Proprietor: **Telefonaktiebolaget LM Ericsson (publ)**
**164 83 Stockholm (SE)**

(72) Inventor: **SKÄRBY, Christian**
**112 64 Stockholm (SE)**

(74) Representative: **Ericsson**
**Patent Development**
**Torshamnsgatan 21-23**
**164 80 Stockholm (SE)**

(56) References cited:
**US-A1- 2010 135 320     US-A1- 2010 190 457**

- **EMRE KOKSAL C ET AL: "Robust Rate-Adaptive Wireless Communication Using ACK/NAK-Feedback", IEEE TRANSACTIONS ON SIGNAL PROCESS, IEEE SERVICE CENTER, NEW YORK, NY, US, vol. 60, no. 4, 1 April 2012 (2012-04-01), pages 1752-1765, XP011433219, ISSN: 1053-587X, DOI: 10.1109/TSP.2011.2179541**

## Description

TECHNICAL FIELD

Embodiments herein relate to a network node and a method therein. In particular, they relate to determining a value for a transmission parameter.

BACKGROUND

Wireless devices are also known as e.g. communication devices, User Equipments (UE), mobile terminals, wireless terminals and/or mobile stations. Wireless devices are enabled to communicate wirelessly in a cellular communications network or wireless communication system, sometimes also referred to as a cellular radio system or cellular networks. The communication may be performed e.g. between two wireless devices, between a wireless device and a regular telephone and/or between a wireless devices and a server via a Radio Access Network (RAN) and possibly one or more core networks, comprised in the cellular communications network.

Wireless devices may further be referred to as mobile telephones, cellular telephones, computers, or surf plates with wireless capability, just to mention some further examples. The wireless devices in the present context may be, for example, portable, pocket-storable, hand-held, computer-comprised, or vehicle-mounted mobile devices, enabled to communicate voice and/or data, via the RAN, with another entity, such as another wireless devices or a server.

The cellular communications network covers a geographical area which is divided into cell areas, wherein each cell area is served by a base station, e.g. a Radio Base Station (RBS), which sometimes may be referred to as e.g. "eNB", "eNodeB", "NodeB", "B node", or BTS (Base Transceiver Station), depending on the technology and terminology used. The base stations may be of different classes such as e.g. macro eNodeB, home eNodeB or pico base station, based on transmission power and thereby also cell size. A cell is the geographical area where radio coverage is provided by the base station at a base station site. One base station, situated on the base station site, may serve one or several cells. The cells often overlap each other. Further, each base station may support one or several communication technologies. The base stations communicate over the air interface, also referred to as the cellular interface, operating on radio frequencies with the wireless devices within range of the base stations.

In 3rd Generation Partnership Project (3GPP) Long Term Evolution (LTE), base stations, which may be referred to as eNodeBs or even eNBs, may be directly connected to one or more core networks.

3GPP LTE radio access standard has been written in order to support high bitrates and low latency both for uplink and downlink traffic. All data transmission is in LTE controlled by the radio base station.

Link adaptation in a communication network is the concept of adjusting parameters related to a transmission of information in order to meet certain objectives. Link adaptation is needed in almost all communication networks which deal with information transmission, including wireless communication networks and wired communication networks. It is particularly challenging in a wireless communication network as the properties of a channel therein tends to change at a relatively rapid pace.

A very common objective to meet is to minimize a resource consumption while retaining a certain desired level of robustness. The resource consumption and robustness are related so that a higher resource consumption means a higher robustness and vice versa. An example is to adjust a transmission power being as a transmission parameter, where the amount of the transmission power available is the resource. The reason is that, taking channel coding scheme as another example, the bigger amount of channel coding, the more resources are needed to transmit the same amount of data.

In traditional Circuit Switched (CS) systems designed to carry conversational voice, the desired level of robustness is typically derived based on user perception of voice quality, e.g. a maximum frequency of lost frames. A well adopted strategy to do link adaptation in such systems is to try to maintain a certain rate of decoding errors, which is referred to as the Block Error Rate (BLER) and the BLER to be achieved will be referred to as a BLER target or a BLER target value.

The rationale behind this strategy is simple: assuming that the BLER target corresponds to what the average user considers good speech quality, then if the BLER is below the BLER target it is possible to save resources by decreasing the robustness without sacrificing user experience while if it is above the target the robustness can be increased to achieve the desired user experience.

For packet switched connections that are used to carry internet traffic the requirements look a bit different. To achieve good performance, extremely low levels of packet loss rates must be reached compared to the voice case. BLER lower than 1% is not something which rhymes well with wireless connections in general, due to the potentially rapid changes of the channel.

US 2010/190457 discloses an approximation method for Signal-to-Noise (SNR) soft information with a probability distribution model. The transmitter transmits data using various MCS values and obtains ACK or NACK feedback.

Based on the received ACKs or NACKs, the transmitter estimates the conditional probability density function of receiving an ACK or an NACK. The transmitter also uses a Gaussian distribution approximate obtain the mean and the variance of the MCSs and ACK/NACK combination of a Gaussian PDF. These values are used to obtain the mean and the variance of the Gaussian distribution to approximate the SNR conditioned on the RSSI values, and based on these approximated Gaussian distribution, the transmitter determines the MCS to be used for the next data transmission.

In contrast to voice however, internet traffic is relatively tolerable to delay and this leaves room for a sender to buffer transmitted packets and retransmit them if they end up lost. This requires a receiver to send some feedback to the transmitter and such schemes are generally referred to as Automatic Repeat reQuest schemes (ARQ). In systems where Forward Error Correction (FEC) is employed there also exists the opportunity to improve the efficiency by combining the FEC and the ARQ into Hybrid ARQ (HARQ) where the receiver combines the received signals for each transmission of the same data before the FEC and therefore utilizes all transmissions, not just the last one, which is the case for a pure ARQ scheme.

With the addition of ARQ and HARQ, the BLER becomes disconnected from the end user experience since a decoding error does not necessarily result in loss of data. In theory, HARQ can more or less replace link adaptation since the transmitter can just keep sending redundant versions of the same data until the accumulated robustness is sufficient for decoding.

In practice however, the feedback delay and resolution as well as the reliability of the feedback channel makes such an approach infeasible in many cases. Although it basically lacks any connection to the end user experience, the BLER target approach is still to this date commonly used to do link adaptation also for packet switched internet data. The only difference compared to the CS voice case is that a BLER target of 10% is often used, in comparison to ~1% for CS voice.

This leads to spectrum inefficiency and suboptimal throughput, which will be explained more in detail in the introduction of the detailed description.

SUMMARY

It is therefore an object of embodiments herein to improve the performance for data transmissions in a communications network. This object is achieved by a method according to claim 1 and a network node according to claim 9.

According to a first aspect of embodiments herein, the object is achieved by a method performed by a first network node for determining a value for a transmission parameter. The first network node is operable in a communication network. The first network node performs a plurality of data transmissions to a second network node in the communication network. Each data transmission is performed with a value of the transmission parameter. The first network node receives at least two negative decoding feedbacks on the plurality of data transmissions from the second network node. The first network node computes a variance of the transmission parameter values which resulted in the at least two negative decoding feedbacks. The first network node determines another value for the transmission parameter based on the variance. The other value of the transmission parameter is for an upcoming data transmission to the second node.

According to a second aspect of embodiments herein, the object is achieved by a first network node for determining a value for a transmission parameter. The first network node is operable in a communication network. The first network node is configured to perform a plurality of data transmissions to a second network node in the communication network. Each data transmission is performed with a value of the transmission parameter. The first network node is further configured to receive, from the second network node, at least two negative decoding feedbacks on the plurality of data transmissions. The first network node is further configured to compute a variance of the transmission parameter values which resulted in the at least two negative decoding feedbacks. The first network node is further configured to determine another value for the transmission parameter based on the variance, which other value of the transmission parameter is for an upcoming data transmission to the second node.

Since the first network node 111 is enabled to adapt the value of the transmission parameter based on the negative decoding feedbacks, a simple way to adapt the the value of the transmission parameter is therefore provided. By adapting the value of the transmission parameter for an upcoming data transmission, the reliability of data transmission is improved. Furthermore, according to the embodiments, the computation is simple, the memory cost is low. Additionally, due to being capable of adapting the value of transmission parameter to the unpredictability of the channel, the throughput is increased according to the embodiments.

BRIEF DESCRIPTION OF THE DRAWINGS

Examples of embodiments herein are described in more detail with reference to attached drawings in which:

Figure 1    is a schematic block diagram illustrating a communication network.

Figure 2A     is a flowchart depicting embodiments of a method in a first network node.

Figure 2B     is a flowchart depicting embodiments of a method in a first network node.

Figure 3      is a flowchart depicting embodiments of a method in a first network node.

Figure 4      is a flowchart depicting embodiments of a method in a first network node.

Figure 5      is a flowchart depicting embodiments of method in a first network node.

Figure 6      is a schematic block diagram illustrating embodiments of a first network node.

Figure 7      is a schematic block diagram illustrating a method in a first network node.

DETAILED DESCRIPION

As part of developing embodiments herein, a problem will first be identified and shortly discussed.

A fundamental difference between CS voice and typical internet traffic is that the CS voice typically has a relatively fixed data rate which basically only depends on the choice of voice codec. The internet traffic is often of type deliver as fast as possible, i.e. there is really no upper bound on what data rate is sufficient.

This makes the BLER target even more arbitrary for internet data. A more suited objective would rather be to obtain an as high as possible residual data rate, i.e. data rate after retransmissions, possibly while keeping a delay bound which corresponds to higher level failure detection schemes, e.g. Transmission Control Protocol (TCP) Retransmission TimeOut (RTO). Given ARQ and ignoring feedback errors, the expected residual data rate, i.e., for a given certain amount of transmitted information bits B may be written as:

$$E[R_B] = E[(1\text{-}P_{BLE,1,B}) * B + P_{BLE,1,B} * ((1 - P_{BLE,2,B}) * B/2 + \ldots + P_{BLE,N\text{-}1,B} * (1 - P_{BLE,N,B})*$$

$$B/N)\ldots)] \hspace{4cm} \text{Function 1}$$

Where $E[R_B]$ is the Expected data rate with ARQ, $P_{BLE,n,B}$ is the probability of a block error for B information bits after n transmissions, and N is the maximum number of transmissions. To maximize the rate, it is needed to find the B which maximizes the expression above. Note that N may be chosen to marginalize the effects of feedback errors and to set an upper delay bound.

$P_{BLE,n,B}$ is typically a known function of a Signal to Interference and Noise Ratio (SINR) of the transmission given the used channel coding scheme. Furthermore, most coding schemes are subject to the cliff effect, i.e. they yield a block error probability of either 0 or 1 and very seldom something in between.

Given the above, it becomes clear that in case the SINR is perfectly known, the B which maximizes the rate is the highest B for which $P_{BLE,1,B}$ is 0, i.e. BLER = 0 gives the best throughput.

In case SINR can't be predicted without error, $P_{BLE,n,B}$ depends essentially only on the SINR prediction error: If the SINR is overestimated, $P_{BLE,n,B}$ is 1, otherwise it is 0

Given all this, it follows that the distribution of $P_{BLE,n,B}$ is more or less given by the distribution of the SINR error. In other words, if having access to the SINR error distribution, it is possible to maximize the expected rate also in the case of unpredictable SINR.

In case link adaptation is performed in the same node which also does the receiver processing, it is straight forward to estimate the SINR error distribution by just sampling the difference between the SINR estimate used to do link adaptation and the SINR estimate of the actual reception.

Internet data is insensitive as block errors are recovered through ARQ mechanisms. A problem of having a BLER based control loop for traffic which is insensitive to BLER, e.g. internet data, is that it leads to suboptimal throughput.

In the case of a BLER target control loop where the target BLER is the BLER after first transmission and for the case when the channel is static, e.g. AWGN, the throughput $E[R_{tot}]$ can under many circumstances be approximated as:

$$E[R_{tot}] = (1\text{-}BLER_{target})*E[R_B] + BLER_{target}*E[R_{B+e}] \hspace{2cm} \text{Function 2}$$

Where B is the largest number of bits for which $P_{BLE,1,B}$ is 0 and e is the smallest possible increment to B, e.g.

corresponding to one MCS index in LTE, i.e. $P_{BLE,1,B+e}$ is 1. Assuming HARQ, $P_{BLE,2,B+e}$ can be assumed to be 0. Inserting this into the Function 2 and Function 1 yields:

$$E[R_{tot}] = (1-BLER_{target})*B + BLER_{target}*(B+e)/2 \qquad \text{Function 3}$$

In case e < B, which is typically the case, and then the throughput decreases with increasing BLER target. As a conclusion, to the extent that the channel is predicable, a low BLER target is preferred.

In the case with an unpredictable channel, a fixed BLER target makes the SINR error distribution determine how much of the achievable maximum throughput the actual throughput is. One way to make a reasoning why this is the case is by the following statement:
In case the SINR cannot be predicted with full accuracy, the only way to be able to sustain a certain target BLER is to always assume that the SINR error will be the $BLER_{target}$ percentile of the SINR error distribution and compensate for that in the SINR estimate. This is what a control loop set to a certain BLER target will do to reach the BLER target.

To further clarify this, an example will be described. Assume that a UE is positioned so that it has a very good path-gain to both its serving cell and a neighbor cell, so that the SINR is e.g. > 20 dB when the neighbor cell is not transmitting and < 3 dB when the neighbor cell is transmitting. The BLER target is 10% for initial transmissions.

Now assume that the neighbor cell starts transmitting intermittently with a frequency of ~11% of the time. In case the transmissions in the neighbor cell cannot be predicted, e.g. through fast coordination, the eNB transmitting to the UE must assume an SINR of ~3dB for all transmissions in order to reach the target BLER. This is since otherwise ~11% of transmissions are a guaranteed block error due to the SINR difference and the cliff effect, which underutilizes the capacity of the channel when the neighbor is not transmitting, even though it is not transmitting very often.

Although not yet a fully accepted paradigm for link adaptation, this effect is known in the prior art and may be solved by adopting the concepts described above. There are however some challenges to implement the principle. The memory cost of storing samples to estimate the SINR error distribution for each UE individual is relatively high. Traffic patterns can change rapidly time meaning that the SINR error is non-stationary. Further, it is not always possible to measure the SINR error directly, e.g. in LTE downlink where link adaptation is performed by the eNB but the receiver processing is done in the UE.

The prior art relies on obtaining the SINR error distribution or the $P_{BLE}$ distribution to adapt the transmission parameter, however the inventor realized that it is not always feasible to measure the distribution directly, e.g. in LTE downlink where link adaptation is performed by the eNB but the receiver processing is done in the UE.

Below, embodiments herein will be described.

Some of the embodiments herein use simple metrics to obtain a time varying estimate of the variance of the SINR error. The variance is capable of adapting to non-stationary condition e.g. by using binary feedback, such as Acknowledgement (ACK)/Non-acknowledgement (NACK), instead of measuring the SINR error directly.

This variance may be mapped to a BLER target through a configuration which may be tuned offline.

As an alternative, other metrics which indirectly measure variance or variability might also be candidates instead of variance e.g. autocorrelation or cross-correlation at given lags, such as lag 0.

Examples of the transmission parameters according to the embodiments which may be used are:

- Modulation scheme, Coding scheme (e.g., a code rate), or the combination thereof, which is known as MCS

- SINR estimate

- Transmission power

The value of the transmission parameter may be referred to as a link adaption decision.

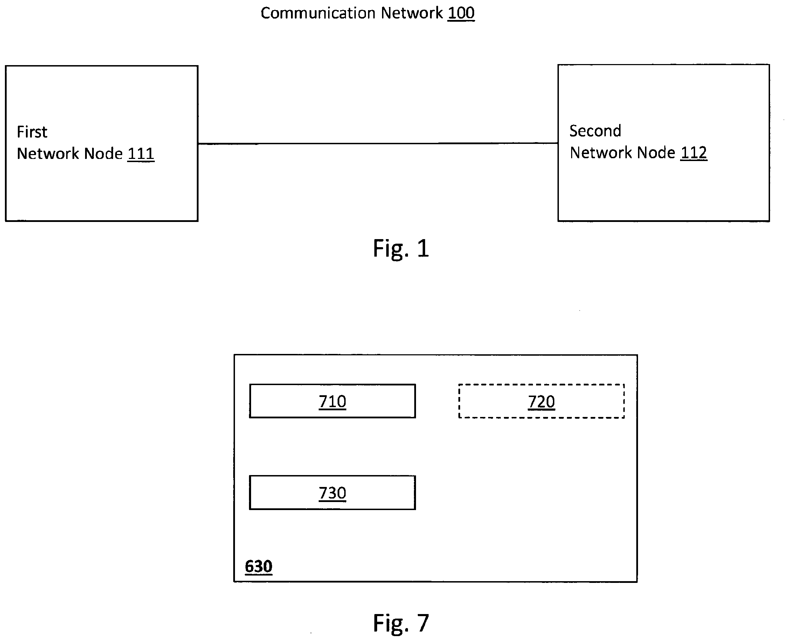

**Figure 1** depicts an example of a **communications network 100** in which embodiments herein may be implemented. In some embodiments the communications network 100 may be a wireless communication network such as e.g. an LTE network, a WCDMA network, a GSM network, any 3GPP cellular network, Wimax, or any cellular network or system.

One or more network nodes operate in the communications network 100, whereof two, a **first network node 111** and a **second network node 112,** are depicted in Figure 1.

The first network node 111 and the second network node 112 may be wireless devices. For instance, the first network node 111 may e.g. be a radio base station, such as an eNB, an eNodeB, or an Home Node B, an Home eNode B or any other network node capable to serve a user equipment or a machine type communication device in a cellular radio network.

The second network node 112 may e.g. be a UE a mobile terminal or a wireless terminal, a mobile phone, a computer such as e.g. a laptop, a Personal Digital Assistants (PDAs) or a tablet computer, sometimes referred to as a surf plate, with wireless capability, or any other radio network units capable to communicate over a radio link in a wireless communications network. Please note the term user equipment used in this document also covers other wireless devices such as Machine to machine (M2M) devices, even though they do not have any user.

In order to adapt the value of the transmission parameter which will be used for an upcoming data transmission, the variance of the at least two values of the transmission parameter which resulted in the at least two negative decoding feedbacks is used for determining the value of the transmission parameter.

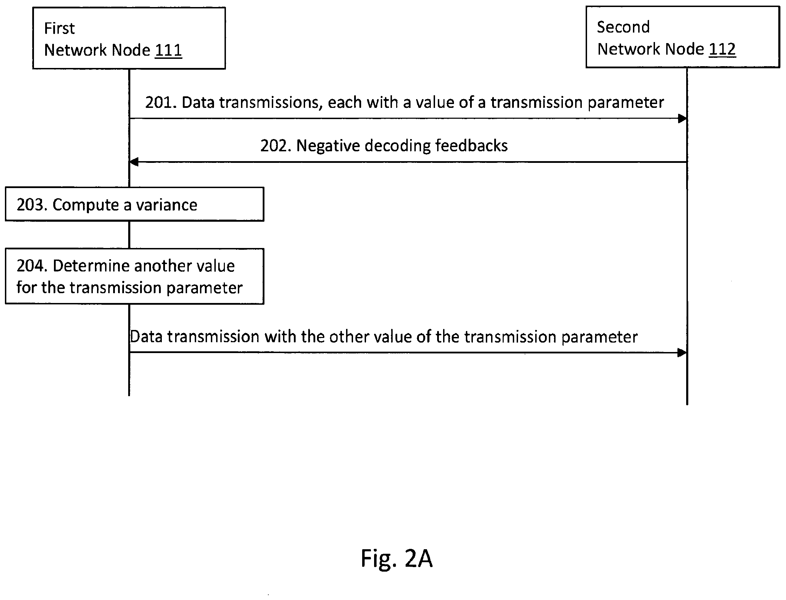

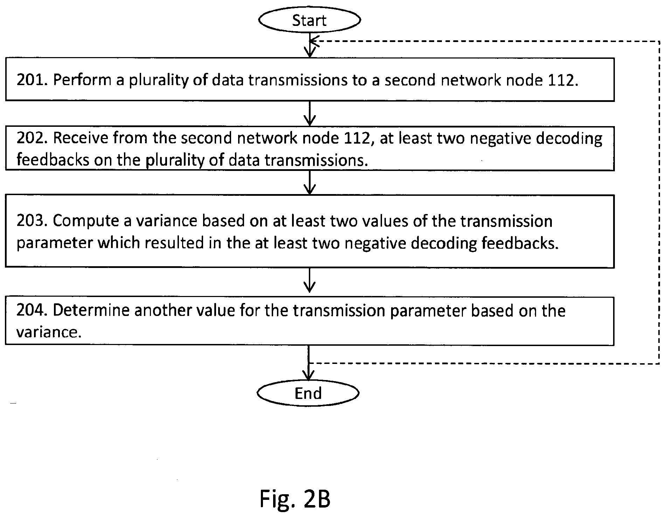

Example of embodiments of a method performed by a first network node 111 for determining a value for a transmission parameter will now be described with reference to **Figure 2A and 2B.** The first network node 111 is operable in a communication network 100.

The method may comprise the following actions, which actions may be taken in any suitable order.

**Action 201**

To send data to the second network node 112, the first network node 111 performs a plurality of data transmissions to the second network node 112 in the communication network 100. For instance, ten data transmissions are performed. Generally, one or more transmission parameters are used for a channel communication between the first network node111 and the second network node 112 in the communication network 100. Thus each data transmission is performed with a value of the transmission parameter. The values of the transmission parameter for different data transmission may be the same sometime.

The data transmissions may be performed either on a data channel or a control channel. The data transmissions may be transmitted in messages which may include user data which is to be transferred from an application behind the communication network 100 to an application in the second network node 112, as well as control data to be transferred from the first network node 111 within the communication network 100 to the second network node 112.

**Action 202**

After receiving each data transmission, the second network node 112 may first attempt to decode it. Then the second network node 112 may return a decoding feedback on the channel decoding of the data transmission. The decoding feedback is for notifying the first network node 111 whether or not the channel decoding succeeded. A positive decoding feedback is returned when the channel decoding succeeded, vice versa, a negative positive decoding feedback is returned when the channel decoding failed. For instance, for three of the ten data transmissions as mentioned above negative decoding feedbacks are returned.

To get a proper calculation base being able to calculate a variance for an Action 203 below, more than one negative decoding feedback is needed. Thus the first network node 111 receives, from the second network node 112, at least two negative decoding feedbacks on the plurality of data transmissions.

**Action 203**

Upon the negative decoding feedback, the first network node 111 can get to know on which specific data transmission a negative decoding feedback was received. As mentioned above, due to that each data transmission is performed with a value of the transmission parameter, the value of the transmission parameter for such a failed data transmission may be obtained then. The first network node 111 therefore may compute a variance based on at least two values of the transmission parameter which resulted in the at least two negative decoding feedbacks.

According to an implementation form, a covariance instead of a variance, e.g. between SINR estimate and SINR estimates which yielded NACK, may be obtained.

**Action 204**

In order to improve the reliability for upcoming data transmissions in the future, the value for the transmission parameter should preferably be adapted according to the channel condition, e.g., the decoding feedback on the data transmission. The first network node 111 thus determines another value for the transmission parameter based on the variance. The other value of the transmission parameter is for an upcoming data transmission to the second node 112.

Advantages with embodiments herein comprise but are not limited to the following:
Embodiments herein improve the spectrum efficiency by adapting the BLER target to the unpredictability of the radio condition.

By applying the example described above when discussing prior art, to embodiments herein, the eNB is capable of realizing that a > 11% BLER target would allow it to assume > 20 dB SINR for all transmissions, which would yield a substantial throughput improvement.

The network node according to embodiments herein is enabled to adapt the value of the transmission parameter based on the negative decoding feedbacks. By doing this, a simple way to adapt the the value of the transmission parameter is therefore provided. That is because the adapting of the value of the transmission parameter based on the negative decoding feedbacks requires much fewer states to be stored compared to a distribution of SINR errors. Furthermore, comparing to obtaining the SINR error which is not always observable directly, obtaining the negative decoding feedbacks is more feasible and can be applied to more scenarios. The decoding feedback may be obtained by using ARQ or HARQ.

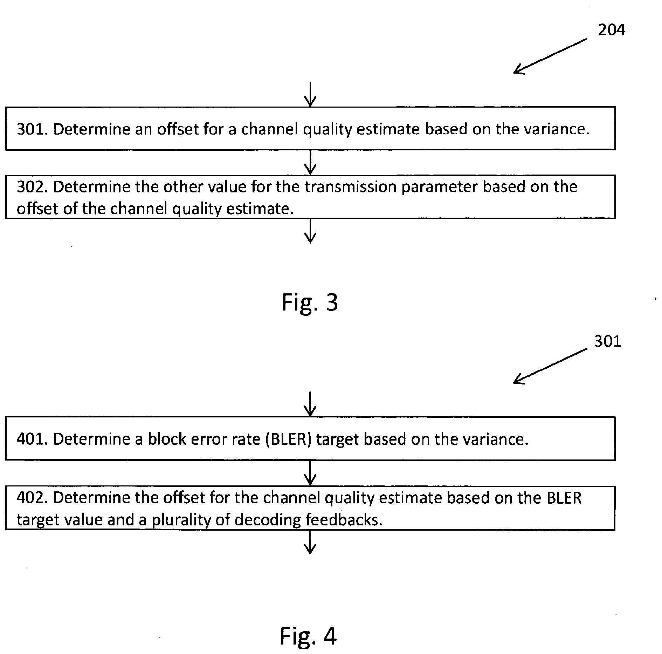

The determining of the other value for the transmission parameter based on the variance in Action 204 above may be performed by the following method depicted in **Figure 3.** The method may comprise the following actions.

### Action 301

The first network node 111 determines an offset for a channel quality estimate based on the variance, in which channel the plurality of data transmissions was performed. Action 301 will be described in detail below.

### Action 302

The first network node 111 then determines the other value for the transmission parameter based on the offset of the channel quality estimate. This may be done by mapping the channel quality estimate including the offset to the sought transmission parameter through a table mapping.

Table 1 is one example table from the LTE specification 36.213, to determine the other value for the transmission parameter based on the offset of the channel quality estimate. The offset of the channel quality estimate would be applied to a Channel Quality Index (CQI) index directly. According to Table 1, a CQI where higher means better channel quality, is mapped to some transmission parameters, such as modulation, code rate and efficiency which is similar to the code rate:

Table 1

| CQI index | modulation | code rate x 1024 | efficiency |
|---|---|---|---|
| 0 | out of range | | |
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 64QAM | 772 | 4.5234 |
| 14 | 64QAM | 873 | 5.1152 |
| 15 | 64QAM | 948 | 5.5547 |

Where CQI is channel quality information index, QPSK is Quadrature Phase Shift Keying in short, QAM stands for Quadrature amplitude modulation. The QPSK and QAM are examples of the Modulation scheme.

The determining of the offset for the channel quality estimate based on the variance in Action 301 above may be performed by the following method depicted in **Figure 4.** The method may comprise the following actions,.

**Action 401**

The first network node 111 determines a BLER, target value based on the variance. By determining a BLER target value based on the variance, the BLER target value is adaptable to the unpredictability of the channel conditions, the embodiments therefore have a technical effect of improving the spectrum efficiency. It's known that most time a too high BLER target may lead to unnecessary retransmissions when the channel is predictable, meanwhile a too low BLER target may lead to a low throughput. According to embodiments herein, a too conservative BLER target is avoided when the channel is unpredictable, which in turn leads to that unnecessary low throughput accordingly is avoided. Thus, as the BLER target value is adaptable to the unpredictability of the channel conditions according to the embodiments, therefore a high BLER target value can be determined even when the channel is unpredictable, high throughput is therefore achieved.

According to some embodiments, the determining of the BLER target value based on the variance in Action 401 is performed by taking the variance as an index to find the BLER target value that corresponds to the variance. In these embodiments, a range of the variance is corresponding to one BLER target value. In these embodiments, the correspondence between the BLER target value and the variance may be stored in a table, as an example, **Table 2** is provided below.

Table 2

| Variance | < 3 | 4-7 | > 7 |
|---|---|---|---|
| BLER target value | 10% | 30% | 50% |

According to Table 2, a higher value in the range of the variance is corresponding to a higher BLER target value.

According to some embodiments, the determining of the BLER target value based on the variance in Action 401 is performed by computing the BLER, by using a function, based on the variance.

Once a variance has been produced, a pre-configured table, e.g. Table 2, may be used to select a suitable BLER target. Since the BLER target which maximizes throughput is proportional to the variance level in some sense, any monotonically increasing function may be used as an alternative to the table. One technical advantage of using a table is that it is easier to parameterize than a mathematical function. Another technical advantage of using a pre-configured table is that the variance is mapped to a BLER target through a configuration which can be tuned offline.

**Action 402**

The first network node 111 determines the offset for channel quality estimate based on the BLER target value and a plurality of decoding feedbacks. By determining offset value based on the variance, the channel quality estimate is adaptable to the unpredictability of the channel conditions, the embodiments therefore have a technical effect of improving the spectrum efficiency, because a too conservative offset leads to low throughput when the channel is unpredictable and a too high offset leads to unnecessary retransmissions when the channel is predictable.

The determination made in Action 402, may be done through a BLER control loop, for instance:

```
Basic step: x dB (configured parameter)
If a decoding feedback is ACK:
              offsetDb = offsetDb + x/(1-BLERtarget)
if a decoding feedback is NACK:
              offsetDb = offsetDb - x
offset for channel quality estimate = channel quality measured +
offsetDb
```

Where BLERtarget is the BLER target value.

Due to the employment of the BLER target value, instead of the distribution of a BLER distribution or SINR error distribution, for determining the offset for channel quality estimate, the embodiments have the technical advantages of: firstly, fewer states per user are required, a less memory cost for storing the states are therefore reduced, additionally, shorter time are needed for the "exploring phase" given the dynamics of a LTE macro network.

Since the embodiments may apply on any architecture which employs a BLER concept, the embodiments do not require any substantial change of the baseline. The embodiments are therefore compatible to any architecture which employs a BLER concept. The time to employ the embodiments in an existing network therefore may be shorten.

It is also straightforward to add bounds for control errors and maximum delay by just bounding the BLER target which the embodiments determine.

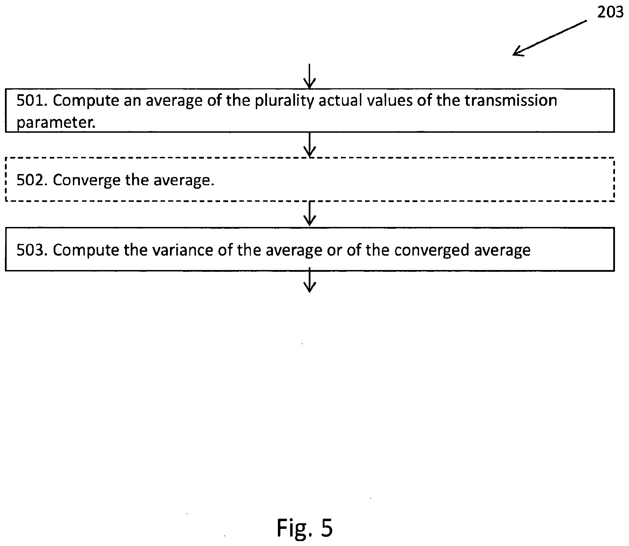

According to some embodiments, computing the variance based on at least two values of the transmission parameter which resulted in the at least two negative decoding feedbacks in the Action 203 above may be performed by the following method depicted in **Figure 5.** In short, the variance is computed based on an average value. The method may comprise the following actions, which actions may be taken in any suitable order.

**Action 501**

The first network node 111 computes an average of the at least two values of the transmission parameter which resulted in the at least two negative decoding feedbacks. The average may also be referred to as a mean below.

As mentioned above, when the covariance instead of variance, e.g. between SINR estimate and SINR estimates which yielded NACK is computed, the mean values for both quantities are needed.

**Action 502**

The first network node 111 converges the average obtained in above Action 501. This Action 502 is optional.

**Action 503**

The first network node 111 computes the variance of the average obtained in above Action 501; or of the converged average obtained in above Action 502 when the Action 502 is performed.

According to some embodiments, the method further comprises recurring the above Actions according to any of the above embodiments.

The negative decoding feedback according to any of the embodiments may be a Negative ACKnowledgement, NACK.

To further explain the computation of the variance mentioned in relation to Figure 5, as an example, the average may be a sliding mean or sliding average, accordingly the variance may be a sliding variance. Thanks to the sliding approach, the embodiments are capable of adapting the value of transmission parameter to non-stationary channel conditions.

As an implementation form of Action 501, a sliding mean value of the link adaptation decisions which cause block errors is computed. The value of the transmission parameter used is called a link adaption decision.

The sliding mean, also known as a moving mean, rolling mean, moving average or sliding average, is a calculation to analyse data points by creating series of averages of different subsets of the full data set. The sliding mean is calculated over a sliding period.

The sliding period is also knowns as sliding window, or sliding window time. A length of the sliding window, e.g. measured in units of time or in number of samples, is called a window size. A sliding period corresponding to the minimum channel coherence time which can be predicted, may be used to compute the sliding mean. By doing this, a high variance is prevented due to the window is short enough to follow changes in the channel quality. Even slow fading channels which are perfectly predicable will have block errors happening for a wide range of link adaptation decisions over a long enough period of time, especially if a BLER target control loop is employed. The key to avoid yielding a high variance is to let the window for the mean value be short enough to follow changes in channel quality which can be predicted, e.g. correspond to the minimum channel coherence time which can be predicted. A sufficiently good value can typically be obtained when analyzing the performance of the baseline link adaptation. As an example, the true SINR error may be measured in a simulation when varying the channel coherence time and get a pretty good picture of when the channel is no longer predictable.

As an example implementation form of Action 503, a sliding variance value based on the sliding mean is calculated. The sliding variance $V_X$ may be computed as:

$$V_X = \sum_{i=1}^{N}(x_i - m_x)^2 \qquad \text{Function 4}$$

Where:

N is the quantity of negative decoding feedbacks, $N \geq 2$

$x_i$ represents sample i of the stochastic variable X, it is the value of the transmission parameter which resulted in the at least two negative decoding feedbacks

$m_x$ is the mean of the at least two values of the transmission parameter which resulted in the at least two negative decoding feedbacks

The sliding variance, also known as moving variance, is calculated over a time period. The time period for the sliding variance is also known as a window, or a time for variance. A length of the window, e.g. measured in units of time or in number of samples, is called a window size. The variance of the SINR error typically changes much more slowly than the channel itself. By definition, the time period for the sliding variance may be a period of time during which the channel condition is considered to be stationary. As an example, the SINR error is stationary. Getting a good one-size-fits-all value for the stationary time may be arguably quite difficult as the time depends on the specific radio environment and traffic. However, the window size for the variance might also be a less important parameter to tune compared to the window size for the sliding mean value. The only consequence if it is too long is that it may take a bit longer to adjust the BLER target when the distribution of the SINR error changes. Basically any value which gives fast enough convergence is good enough.

As an implementation form of Action 502, computing the sliding mean value may require the mean to have converged before computing the variance. The reason for this is that the variance being the second moment may be very sensitive to outliers entered while the mean value is converging. Not only will such values be amplified by the square, the variance will also never be a negative value meaning that it takes a very long time to mitigate the effects of outliers. There are many ways to test for convergence according to prior art.

The embodiments above will now be described more in detail and exemplified. This text below is applicable to any suitable embodiment described above.

The method according to embodiments herein may be implemented in a node which performs link adaptation, such as the first network node 111, and receives feedback of decoding results of transmissions from another node, such as the second network node 112. In an example, the first network node 111 is an LTE eNB, and the second network node 112 is a UE. The LTE eNB may be the apparatus which implements the embodiments.

As described above, the feedback of the decoding result may be used to estimate the variance of the SINR error. This may be done by calculating a sliding variance of the link adaptation decisions which cause block errors over a period of time, which will be explained further below.

An example to clarify the rationale: If all block errors happen when the same MCS is used it is a clear indication that the SINR error is low, which means the channel prediction is accurate. At the same time, it is also a clear indication to stop using that MCS since it is clearly not working and aim of a lower BLER.

In order to further improve the understanding, two example embodiments on computing the variance in relation to Figure 5 are given below.

**Example embodiment 1**

In this embodiment channel quality estimate offsets from a BLER target control loop, called control loop offsets, are used to determine a variance. The control loop offset is also referred to as control loop adjustment. The sliding variance and sliding mean are computed through a rectangular sliding window, in which samples inside the window have equal contribution to forming the mean and variance while samples outside the window are discarded. Since the rectangular sliding window gives equal weight to old values, the need to check convergence may be less prominent.

(With respect to the initialization of the mean value and variance value, an example embodiment 2 is provided below this embodiment.)

Parameters involved:

- $ws_{Mean}$ Window size for mean value, i.e., the number of samples for computing mean value

- $ws_{Var}$ Window size for variance, i.e., the number of samples for computing variance

Algorithm states

- $CLA_{NACK}[]$: Sample window of control loop adjustments used for data transmission which yielded the negative decoding feedback e.g. NACK

- $BLER_{target,curr}$: The current BLER target

Input

- $CLA_{NACK}$: The last value of control loop adjustment used for data transmission which yielded the negative decoding feedback e.g. NACK

- $CLA_{NACK[i]}$: Sample value i of control loop adjustment used for data transmission which yielded the negative decoding feedback e.g. NACK

Output

- $BLER_{target}$: The BLER target value to use for a future data transmission

Initialization

- $BLER_{target,curr}$ = The current BLER target value

Algorithm

Add new value to the sample window:

   o $CLA_{NACK}[end]$ = $CLA_{NACK}$

   o Where "end" denotes the end of the sample vector

Check if sufficient number of samples has been acquired:

- If number of samples in $CLA_{NACK}[]$ > $ws_{Var}$

Compute variance and update BLER target:

   o Mean = mean value of $ws_{Mean}$ sample values of control loop adjustment in $CLA_{NACK}[]$

   o Var = $\sum_{i=1}^{ws_{Var}}(CLA_{NACK[i]} - Mean)^2$ in $CLA_{NACK}[]$, preferably, the last $ws_{Var}$ sample values of control loop is used

○ BLER$_{target,curr}$ = table(Var)

• End if

Output:

○ BLER$_{target}$ = BLER$_{target,curr}$

**Example embodiment 2**

This example embodiment outlines the way the mean value and variance value is initialized at the very beginning for the example embodiment 1 above. Again, sliding mean and the sliding variance is used an example. In this embodiment, a BLER target control loop for the downlink data transmission is used by the first network node 111, meanwhile the HARQ feedback is used to add an offset to the channel quality reported by the UE such as the second network node 112.

The first network node 111 may also keep track of which MCS was used in order to prevent windup in case the channel is either too poor or too good to be able to reach the BLER target value with the range of MCS available in the standard. This may make the MCS being the transmission parameter as a natural choice for the variance calculation.

Furthermore, the calculation of the sliding mean and the sliding variance may performed through Exponentially Weighted Moving Average (EWMA) filtering, by doing this, a small memory footprint and cycle cost technical effects is achieved.

The EWMA is a type of infinite impulse response filter that applies weighting factors which decrease exponentially. The weighting for each older datum decreases exponentially, never reaching zero. The graph at right shows an example of the weight decrease.

The EWMA for a series Y may be calculated recursively:

$$S_1 = Y_1$$

for

$$t > 1, \quad S_t = \alpha \cdot Y_t + (1 - \alpha) \cdot S_{t-1}$$

Where:

• The coefficient $\alpha$ represents the degree of weighting decrease, a constant smoothing factor which may be between 0 and 1. A higher $\alpha$ discounts older observations faster.
• $Y_t$ is the value at a time period t.
• $S_t$ is the value of the EMA at any time period t.

$S_1$ is undefined. $S_1$ may be initialized in a number of different ways, most commonly by setting $S_1$ to $Y_1$, though other techniques exist, such as setting $S_1$ to an average of the first 4 or 5 observations. The importance of the $S_1$ initializations effect on the resultant moving average depends on $\alpha$; smaller $\alpha$ values make the choice of $S_1$ relatively more important than larger $\alpha$ values, since a higher $\alpha$ discounts older observations faster.

Involved parameters in this embodiment:

- $ff_{Mean}$ Filter parameter for mean value, it is a coefficient used for computing the mean value, corresponds to the coefficient $\alpha$ as mentioned above

- $ff_{Var}$ Filter parameter for variance, it is a coefficient used for computing the variance, corresponds to the coefficient $\alpha$ as mentioned above

- $th_{mean,c}$ Threshold for mean value convergence

The Algorithm states:

- Mean: The short term for mean value

- Var: The short term for variance

- $BLER_{target,curr}$: The current BLER target value

- $BLER_{target}$: The new BLER target value

Input

- $MCS_{NACK,}$: The value of MCS used for data transmission which incurred the negative decoding feedback, e.g. NACK

Output

- $BLER_{target}$: The BLER target value to use for a future data transmission

Initialization

- Mean = first received $MCS_{NACK}$

- $Var = 0$

- $BLER_{target,curr}$ = The starting value configured for BLER

Algorithm

Calculate a new mean value:

- NewMean = (1- ff$_{Mean}$)*Mean + ff$_{Mean}$ *MCS$_{NACK}$

Check for convergence:

. If abs(NewMean – Mean) < th$_{mean,c}$

Update variance and BLER target:

  o Var = (1- ff$_{Var}$)*Var + ff$_{Var}$ *(NewMean - MCS$_{NACK}$)^2

  o BLER$_{target,curr}$ = table(Var)

- End if

Update Mean:

  o Mean = NewMean

Output:

  o BLER$_{target}$ = BLER$_{target,curr}$

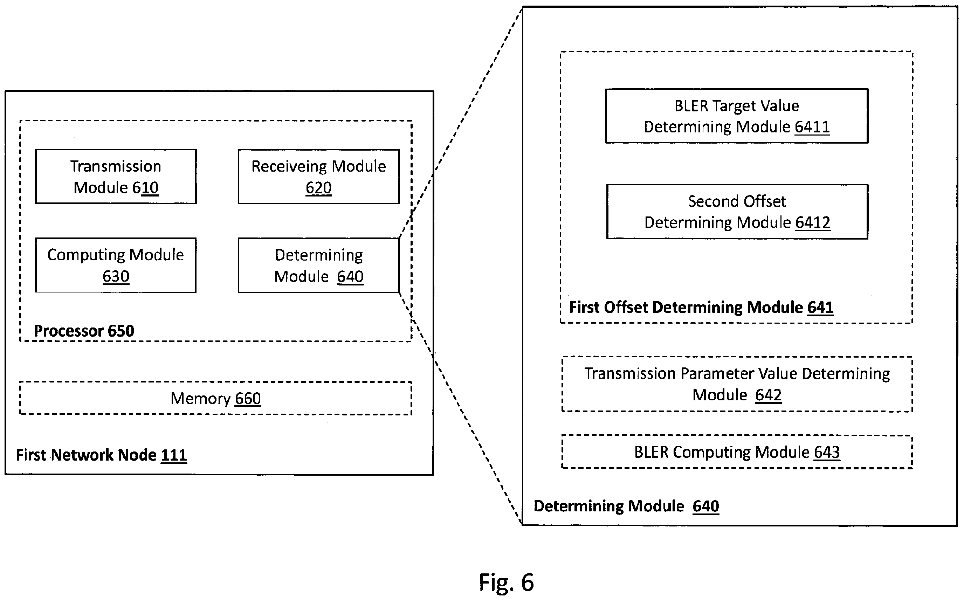

To perform the method actions for determining a value for a transmission parameter, a first network node 111 may comprise the following arrangement depicted in **Figure 6.** As mentioned above, first network node 111 is operable in a communication network 100.

The first network node 111 is configured to, e.g. by means of a **transmission module 610** configured to; perform a plurality of data transmissions to a second network node 112 in the communication network 100. Each data transmission is performed with a value of the transmission parameter.

The first network node 111 is also configured to, e.g. by means of a **receiving module 620** configured to, receive, from the second network node 112, at least two negative decoding feedbacks on the plurality of data transmissions.

The first network node 111 is also configured to, e.g. by means of a **computing module 630** configured to, compute a variance based on at least two values of the transmission parameter which resulted in the at least two negative decoding feedbacks.

The first network node 111 is also configured to, e.g. by means of a **determining module 640** configured to, determine another value for the transmission parameter based on the variance, which other value of the transmission parameter is for an upcoming data transmission to the second node 112.

According to some embodiments, the first network node 111 is further configured to, e.g. by means of the **determining module 640** configured to, determine the other value for the transmission parameter based on the variance by:

- determining, e.g. by means of a **first offset determining module 641,** an offset for a channel quality estimate based on the variance, in which channel the plurality of data transmissions was performed; and
- determining, e.g. by means of a **transmission parameter value determining module 642,** the other value for the transmission parameter based on the offset of the channel quality estimate

According to some alternative embodiments, the determining module 640 comprises a first offset determining module 641 and a transmission parameter value determining module 642. The first offset determining module 641 is configured to determine an offset for a channel quality estimate based on the variance, in which channel the plurality of data transmissions was performed. The transmission parameter value determining module 642 is configured to determine the other value for the transmission parameter based on the offset of the channel quality estimate.

According to some embodiments, the first network node 111 is further configured to, e.g. by means of the **first offset determining module 641** configured to, determine the offset for the channel quality estimate based on the variance by:

- determining, e.g. by means of a **BLER target value determining module 6411,** a BLER target value based on the variance; and

- determining e.g. by means of a **second offset determining module 6412,** the offset for channel quality estimate based on the BLER target value and a plurality of decoding feedbacks.

According to some embodiments, the first network node 111 is further configured to, e.g. by means of the **BLER target value determining module 6411** configured to, determine the BLER target value based on the variance by taking the variance as an index to find the BLER target value that corresponds to the variance. In such a case, a range of the variance is corresponding to one BLER target value. The correspondence between the BLER target value and the variance may be stored in a table, an example, Table 2 is shown above.

According to some embodiments, the first network node 111 is further configured to, e.g. by means of the **determining module 640** configured to, determine the BLER target value based on the variance by computing the BLER, by using a function, based on the variance. The action of computing the BLER based the variance is e.g. by means of a BLER computing module 643.

According to some embodiments, the first network node 111 is further configured to, e.g. by means of the **determining module 640** configured to, determine the BLER target value based on the variance by computing the BLER, by using a function, based on the variance. The action of computing the BLER based the variance is e.g. by means of a BLER computing module 643.

According to some embodiments depicted in Figure 7, the first network node 111 is further configured to, e.g. by means of the **computing module 630** configured to compute the variance based on at least two values of the transmission parameter which resulted in the at least two negative decoding feedbacks by:

- computing, e.g. by means of an average computing module 710, an average of the at least two values of the transmission parameter which resulted in the at least two negative decoding feedbacks; and
- converging, which is optional, e.g. by means of an converging module 720, the average; and
- computing e.g. by means of a variance computing module 730 configured to, the variance of the average; or computing e.g. by means of the variance computing module 730 configured to, the variance of the converged average.

According to some embodiments, the first network node 111 is further configured to recur the above Actions according to any of the above method embodiments, e.g. by means of the above modules, respectively.

The negative decoding feedback according to any of the above apparatus embodiments may be a Negative ACKnowledgement, NACK.

According to an alternative embodiment, the above mentioned modules shown in the corresponding Figures may be comprised in one or more processors, such as the **processor 650** in the first network node 111 depicted in Figure 6.

In some embodiments, a computer program comprises instructions, which when executed by the first network node 111, cause the first network node 111 to perform actions according to any of the Actions 201-204, 301-302 and 401-402.

In some embodiments, a carrier comprises the computer program, wherein the carrier is one of an electronic signal, an optical signal, an electromagnetic signal, a magnetic signal, an electric signal, a radio signal, a microwave signal, or a computer-readable storage medium.

According to an some embodiments, the Actions 201-204, 301-302, 401-402, and 501-503 of the method performed by the first network node 111 for determining a value for a transmission parameter, may be implemented through one or more processors, such as the **processor 650** in the first network node 111 depicted in Figure 6, together with computer program code for performing the functions and actions of the embodiments herein. The program code mentioned above may also be provided as a computer program product, for instance in the form of a data carrier carrying computer program code for performing the embodiments herein when being loaded into the first network node 111. One such carrier may be in the form of a CD ROM disc. It is however feasible with other data carriers such as a memory stick. The computer program code may furthermore be provided as pure program code on a server and downloaded to first network node 111.

The first network node 111 may further comprise a memory comprising one or more memory units, such as a **memory 660** in Figure 6. The memory 660 comprises instructions executable by the respective processor.

The memory 660 is arranged to be used to store e.g. data, configurations, and applications to perform the methods herein when being executed in the first network node 111.

Those skilled in the art will also appreciate that the modules in the first network node 111, described above may refer to a combination of analog and digital circuits, and/or one or more processors configured with software and/or firmware, e.g. stored in the respective memory 660, that when executed by the one or more processors such as the processor 650 as described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

When using the word "comprise" or "comprising" it shall be interpreted as nonlimiting, i.e. meaning "consist at least of".

The embodiments herein are not limited to the above described preferred embodiments. Various alternatives, modifications and equivalents may be used. Therefore, the above embodiments should not be taken as limiting the scope of the invention, which is defined by the appending claims.

**Claims**

1. A method performed by a first network node (111) for determining a value for a transmission parameter, which first network node (111) is operable in a communication network (100), the method comprising:

    - *performing* (201) a plurality of data transmissions to a second network node (112) in the communication network (100), wherein each data transmission is performed with a value of the transmission parameter;
    - *receiving* (202), from the second network node (112), at least two negative decoding feedbacks on the plurality of data transmissions;
    - *computing* (203) the variance of the transmission parameter values which resulted in the negative decoding feedbacks; and
    - *determining* (204) another value for the transmission parameter based on the variance, which other value of the transmission parameter is for an upcoming data transmission to the second node (112).

2. The method according to claim 1, wherein *determining* (204) the other value for the transmission parameter based on the variance comprises:

    - *determining* (301) an offset for a channel quality estimate based on the variance, in which channel the plurality of data transmissions was performed; and
    - *determining* (302) the other value for the transmission parameter based on the offset of the channel quality estimate.

3. The method according to claim 2, wherein *determining* (301) the offset for the channel quality estimate based on the variance comprises:

    - *determining* (401) a Block Error Rate, BLER, target value based on the variance; and
    - *determining* (402) the offset for channel quality estimate based on the BLER target value and a plurality of decoding feedbacks.

4. The method according to claim 3, wherein *determining* (401) the BLER target value based on the variance comprises taking the variance as an index to find the BLER target value that corresponds to the variance.

5. The method according to claim 4, wherein a range of the variance is corresponding to one BLER target value.

6. The method according to any of claims 4-5, wherein the correspondence between the BLER target value and the variance is stored in a table.

7. The method according to claim 3, wherein *determining* (401) the BLER target value based on the variance comprises computing the BLER, by using a function, based on the variance.

8. A computer program comprising instructions, which when executed by a first network node (111), cause the first network node (111) to perform the method according to any of the claims 1-7.

9. A first network node (111) for determining a value for a transmission parameter, which first network node (111) is operable in a communication network (100), the first network node (111) being configured to:

    - *perform* a plurality of data transmissions to a second network node (112) in the communication network (100), wherein each data transmission is performed with a value of the transmission parameter;
    - *receive*, from the second network node (112), at least two negative decoding feedbacks on the plurality of data transmissions;

- *compute* the variance of the transmission parameter values which resulted in the negative decoding feedbacks; and
- *determine* another value for the transmission parameter based on the variance, which other value of the transmission parameter is for an upcoming data transmission to the second node (112).

10. The first network node (111) according to claim 9, wherein the first network node (111) is further configured to *determine* the other value for the transmission parameter based on the variance by:

- *determining* an offset for a channel quality estimate based on the variance, in which channel the plurality of data transmissions was performed; and
- *determining* the other value for the transmission parameter based on the offset of the channel quality estimate.

11. The first network node (111) according to claim 10, wherein the first network node (111) is further configured to *determine* the offset for the channel quality estimate based on the variance by:

- *determining* a Block Error Rate, BLER, target value based on the variance; and
- *determining* the offset for channel quality estimate based on the BLER target value and a plurality of decoding feedbacks.

12. The first network node (111) according to claim 11, wherein the first network node (111) is further configured to *determine* the BLER target value based on the variance by taking the variance as an index to find the BLER target value that corresponds to the variance.

13. The first network node (111) according to claim 12, wherein a range of the variance is corresponding to one BLER target value.

14. The first network node (111) according to any of claims 12-13, wherein the correspondence between the BLER target value and the variance is stored in a table.

15. The first network node (111) according to claim 11, wherein the first network node (111) is further configured to *determine* the BLER target value based on the variance by computing the BLER, by using a function, based on the variance.

## Patentansprüche

1. Verfahren, das von einem ersten Netzwerkknoten (111) zum Ermitteln eines Werts für einen Übertragungsparameter durchgeführt wird, welcher erste Netzwerkknoten (111) in einem Kommunikationsnetzwerk (100) betrieben werden kann, wobei das Verfahren umfasst:

- *Durchführen* (201) einer Vielzahl von Datenübertragungen zu einem zweiten Netzwerkknoten (112) in dem Kommunikationsnetzwerk (100), wobei jede Datenübertragung mit einem Wert des Übertragungsparameters durchgeführt wird;
- *Empfangen* (202), von dem zweiten Netzwerkknoten (112), mindestens zwei negativer Decodierungsrückmeldungen zu der Vielzahl von Datenübertragungen;
- *Berechnen* (203) der Varianz der Übertragungsparameterwerte, die in den negativen Decodierungsrückmeldungen resultierten; und
- *Ermitteln* (204) eines anderen Werts für den Übertragungsparameter, basierend auf der Varianz, welcher andere Wert des Übertragungsparameters für eine anstehende Datenübertragung zu dem zweiten Knoten (112) ist.

2. Verfahren nach Anspruch 1, wobei *Ermitteln* (204) des anderen Werts für den Übertragungsparameter, basierend auf der Varianz umfasst:

- *Ermitteln* (301) eines Versatzes für eine Kanalqualitätsschätzung, basierend auf der Varianz, in welchem Kanal die Vielzahl von Datenübertragungen durchgeführt wurde; und
- *Ermitteln* (302) des anderen Werts für den Übertragungsparameter, basierend auf dem Versatz der Kanalqualitätsschätzung.

3. Verfahren nach Anspruch 2, wobei *Ermitteln* (301) des Versatzes für die Kanalqualitätsschätzung, basierend auf der Varianz umfasst:

   - *Ermitteln* (401) eines Blockfehlerraten-, BLER, Zielwerts, basierend auf der Varianz; und
   - *Ermitteln* (402) des Versatzes für Kanalqualitätsschätzung, basierend auf dem BLER-Zielwert und einer Vielzahl von Decodierungsrückmeldungen.

4. Verfahren nach Anspruch 3, wobei *Ermitteln* (401) des BLER-Zielwerts, basierend auf der Varianz Herannehmen der Varianz als einen Index umfasst, um den BLER-Zielwert zu finden, der der Varianz entspricht.

5. Verfahren nach Anspruch 4, wobei eine Spanne der Varianz einem BLER-Zielwert entspricht.

6. Verfahren nach einem der Ansprüche 4-5, wobei die Entsprechung zwischen dem BLER-Zielwert und der Varianz in einer Tabelle gespeichert wird.

7. Verfahren nach Anspruch 3, wobei *Ermitteln* (401) des BLER-Zielwerts, basierend auf der Varianz Berechnen der BLER, unter Verwendung einer Funktion, basierend auf der Varianz umfasst.

8. Computerprogramm, umfassend Befehle, die, wenn von einem ersten Netzwerkknoten (111) ausgeführt, den ersten Netzwerkknoten (111) veranlassen, das Verfahren nach einem der Ansprüche 1-7 durchzuführen.

9. Erster Netzwerkknoten (111) zum Ermitteln eines Werts für einen Übertragungsparameter, welcher erste Netzwerkknoten (111) in einem Kommunikationsnetzwerk (100) betrieben werden kann, wobei der erste Netzwerkknoten (111) konfiguriert ist zum:

   - *Durchführen* einer Vielzahl von Datenübertragungen zu einem zweiten Netzwerkknoten (112) in dem Kommunikationsnetzwerk (100), wobei jede Datenübertragung mit einem Wert des Übertragungsparameters durchgeführt wird;
   - *Empfangen,* von dem zweiten Netzwerkknoten (112), mindestens zwei negativer Decodierungsrückmeldungen zu der Vielzahl von Datenübertragungen;
   - *Berechnen* der Varianz der Übertragungsparameterwerte, die in den negativen Decodierungsrückmeldungen resultierten; und
   - *Ermitteln* eines anderen Werts für den Übertragungsparameter, basierend auf der Varianz, welcher andere Wert des Übertragungsparameters für eine anstehende Datenübertragung zu dem zweiten Knoten (112) ist.

10. Erster Netzwerkknoten (111) nach Anspruch 9, wobei der erste Netzwerkknoten (111) weiter konfiguriert ist, den anderen Wert für den Übertragungsparameter basierend auf der Varianz zu *ermitteln,* durch:

    - *Ermitteln* eines Versatzes für eine Kanalqualitätsschätzung, basierend auf der Varianz, in welchem Kanal die Vielzahl von Datenübertragungen durchgeführt wurde; und
    - *Ermitteln* des anderen Werts für den Übertragungsparameter, basierend auf dem Versatz der Kanalqualitätsschätzung.

11. Erster Netzwerkknoten (111) nach Anspruch 10, wobei der erste Netzwerkknoten (111) weiter konfiguriert ist, den Versatz für die Kanalqualitätsschätzung basierend auf der Varianz zu *ermitteln,* durch:

    - *Ermitteln* eines Blockfehlerraten-, BLER, Zielwerts, basierend auf der Varianz; und
    - *Ermitteln* des Versatzes für Kanalqualitätsschätzung, basierend auf dem BLER-Zielwert und einer Vielzahl von Decodierungsrückmeldungen.

12. Erster Netzwerkknoten (111) nach Anspruch 11, wobei der erste Netzwerkknoten (111) weiter konfiguriert ist, den BLER-Zielwert basierend auf der Varianz zu *ermitteln,* indem er die Varianz als einen Index herannimmt, um den BLER-Zielwert zu finden, der der Varianz entspricht.

13. Erster Netzwerkknoten (111) nach Anspruch 12, wobei eine Spanne der Varianz einem BLER-Zielwert entspricht.

14. Erster Netzwerkknoten (111) nach einem der Ansprüche 12-13, wobei die Entsprechung zwischen dem BLER-Zielwert und der Varianz in einer Tabelle gespeichert wird.

**15.** Erster Netzwerkknoten (111) nach Anspruch 11, wobei der erste Netzwerkknoten (111) weiter konfiguriert ist, den BLER-Zielwert basierend auf der Varianz zu *ermitteln,* indem er den BLER unter Verwendung einer Funktion basierend auf der Varianz berechnet.

**Revendications**

**1.** Procédé effectué par un premier nœud de réseau (111) pour déterminer une valeur pour un paramètre de transmission, lequel premier nœud de réseau (111) peut fonctionner dans un réseau de communications (100), le procédé comprenant les étapes consistant à :

- *effectuer* (201) une pluralité de transmissions de données vers un second nœud de réseau (112) dans le réseau de communication (100), dans lequel chaque transmission de données est effectuée avec une valeur du paramètre de transmission ;
- *recevoir* (202), depuis le second nœud de réseau (112), au moins deux retours de décodage négatifs sur la pluralité de transmissions de données ;
- *calculer* (203) la variance des valeurs de paramètre de transmission qui ont donné lieu aux retours de décodage négatifs ; et
- *déterminer* (204) une autre valeur pour le paramètre de transmission sur la base de la variance, laquelle autre valeur du paramètre de transmission est destinée à une prochaine transmission de données vers le second nœud (112).

**2.** Procédé selon la revendication 1, dans lequel l'étape consistant à *déterminer* (204) l'autre valeur pour le paramètre de transmission sur la base de la variance comprend les étapes consistant à :

- *déterminer* (301) une compensation pour une estimation de qualité de canal sur la base de la variance, dans lequel canal la pluralité de transmissions de données a été effectuée ; et
- *déterminer* (302) l'autre valeur pour le paramètre de transmission sur la base de la compensation de l'estimation de qualité de canal.

**3.** Procédé selon la revendication 2, dans lequel l'étape consistant à *déterminer* (301) la compensation pour l'estimation de qualité de canal sur la base de la variance comprend les étapes consistant à :

- *déterminer* (401) une valeur cible de taux d'erreur sur les blocs, TEB, sur la base de la variance ; et
- *déterminer* (402) la compensation pour l'estimation de qualité de canal sur la base de la valeur cible de TEB et une pluralité de retours de décodage.

**4.** Procédé selon la revendication 3, dans lequel l'étape consistant à *déterminer* (401) la valeur cible de TEB sur la base de la variance comprend l'étape consistant à prendre la variance comme un indice pour trouver la valeur cible de TEB qui correspond à la variance.

**5.** Procédé selon la revendication 4, dans lequel une plage de la variance correspond à une valeur cible de TEB.

**6.** Procédé selon l'une quelconque des revendications 4 à 5, dans lequel la correspondance entre la valeur cible de TEB et la variance est stockée dans un tableau.

**7.** Procédé selon la revendication 3, dans lequel l'étape consistant à *déterminer* (401) la valeur cible de TEB sur la base de la variance comprend l'étape consistant à calculer le TEB, en utilisant une fonction, sur la base de la variance.

**8.** Programme informatique comprenant des instructions qui, lorsqu'elles sont exécutées par un premier nœud de réseau (111), amènent le premier nœud de réseau (111) à effectuer le procédé selon l'une quelconque des revendications 1 à 7.

**9.** Premier nœud de réseau (111) pour déterminer une valeur pour un paramètre de transmission, lequel premier nœud de réseau (111) peut fonctionner dans un réseau de communications (100), le premier nœud de réseau (111) étant configuré pour :

- *effectuer* une pluralité de transmissions de données vers un second nœud de réseau (112) dans le réseau de communications (100), dans lequel chaque transmission de données est effectuée avec une valeur du paramètre de transmission ;

- *recevoir,* depuis le second nœud de réseau (112), au moins deux retours de décodage négatifs sur la pluralité de transmissions de données ;

- *calculer* la variance des valeurs de paramètre de transmission qui ont donné lieu aux retours de décodage négatifs ; et

- *déterminer* une autre valeur pour le paramètre de transmission sur la base de la variance, laquelle autre valeur du paramètre de transmission est destinée à une prochaine transmission de données vers le second nœud (112).

10. Premier nœud de réseau (111) selon la revendication 9, dans lequel le premier nœud de réseau (111) est en outre configuré pour *déterminer* l'autre valeur pour le paramètre de transmission sur la base de la variance en :

- *déterminant* une compensation pour une estimation de qualité de canal sur la base de la variance, dans lequel canal la pluralité de transmissions de données a été effectuée ; et

- *déterminant* l'autre valeur pour le paramètre de transmission sur la base de la compensation de l'estimation de qualité de canal.

11. Premier nœud de réseau (111) selon la revendication 10, dans lequel le premier nœud de réseau (111) est en outre configuré pour *déterminer* la compensation pour l'estimation de qualité de canal sur la base de la variance en :

- *déterminant* une valeur cible de taux d'erreur sur les blocs, TEB, sur la base de la variance ; et

- *déterminant* la compensation pour l'estimation de qualité de canal sur la base de la valeur cible de TEB et une pluralité de retours de décodage.

12. Premier nœud de réseau (111) selon la revendication 11, dans lequel le premier nœud de réseau (111) est en outre configuré pour *déterminer* la valeur cible de TEB sur la base de la variance en prenant la variance comme un indice pour trouver la valeur cible de TEB qui correspond à la variance.

13. Premier nœud de réseau (111) selon la revendication 12, dans lequel une plage de la variance correspond à une valeur cible de TEB.

14. Premier nœud de réseau (111) selon l'une quelconque des revendications 12 à 13, dans lequel la correspondance entre la valeur cible de TEB et la variance est stockée dans un tableau.

15. Premier nœud de réseau (111) selon la revendication 11, dans lequel le premier nœud de réseau (111) est en outre configuré pour *déterminer* la valeur cible de TEB sur la base de la variance en calculant le TEB, en utilisant une fonction, sur la base de la variance.

Communication Network 100

First
Network Node 111

Second
Network Node 112

Fig. 1

710

720

730

630

Fig. 7

Second Network Node 112

First Network Node 111

201. Data transmissions, each with a value of a transmission parameter

202. Negative decoding feedbacks

203. Compute a variance

204. Determine another value for the transmission parameter

Data transmission with the other value of the transmission parameter

Fig. 2A

Start

201. Perform a plurality of data transmissions to a second network node 112.

202. Receive from the second network node 112, at least two negative decoding feedbacks on the plurality of data transmissions.

203. Compute a variance based on at least two values of the transmission parameter which resulted in the at least two negative decoding feedbacks.

204. Determine another value for the transmission parameter based on the variance.

End

Fig. 2B

| 301. Determine an offset for a channel quality estimate based on the variance. |
| --- |

| 302. Determine the other value for the transmission parameter based on the offset of the channel quality estimate. |
| --- |

Fig. 3

301

| 401. Determine a block error rate (BLER) target based on the variance. |
| --- |

| 402. Determine the offset for the channel quality estimate based on the BLER target value and a plurality of decoding feedbacks. |
| --- |

Fig. 4

501. Compute an average of the plurality actual values of the transmission parameter.

502. Converge the average.

503. Compute the variance of the average or of the converged average

Fig. 5

EP 3 433 958 B1

Fig. 6

**EP 3 433 958 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2010190457 A